# FASCICULE DE BREVET EUROPEEN

(11) **EP 0 525 162 B1**
(45) Date de publication et mention de la délivrance du brevet: **26.04.1995**
(21) Numéro de dépôt: 92905738.8
(22) Date de dépôt: 13.02.1992
(51) Int. Cl.: G01D 5/26

(54) **RECEPTEUR DE DEMULTIPLEXAGE SEQUENTIEL POUR UN RESEAU DE CAPTEURS OPTIQUES A CODAGE DE MODULATION SPECTRALE**
SEQUENTIELLE DEMULTIPLEXIERUNGSEMPFÄNGER FÜR SPEKTRALMODULATIONSKODIERTES SENSORNETZWERK
SEQUENTIAL DEMULTIPLEXING RECEIVER FOR AN OPTICAL SENSOR ARRAY WITH SPECTRAL MODULATION CODING

(30) Priorité: 14.02.1991 FR 9101733
(43) Date de publication de la demande: 03.02.1993
(73) Titulaire: BERTIN & CIE, F-78373 Plaisir Cédex (FR)
(72) Inventeur: LEQUIME, Michel, F-13510 Eguilles (FR); SANSONETTI, Pierre, F-13090 Aix-en-Provence (FR)
(74) Mandataire: Ramey, Daniel
(86) Numéro de dépôt international: FR9200141
(87) Numéro de publication internationale: WO9214990

(56) Documents cités:
- EP-A- 0 191 588
- US-A- 4 799 797
- Journal of the Institution of Electronic and Radio Engineers, vol. 58, no. 5, July 1988, London, GB, pages 99-111; Kersey et al: "Distributed and multiplexed fibre-optic sensor systems"

## Description

L'invention concerne un récepteur de démultiplexage séquentiel pour un réseau de capteurs optiques interférométriques à codage de modulation spectrale, qui est éclairé par une source de lumière de faible longueur de cohérence et dans lequel chaque capteur soumis à une grandeur physique à mesurer génère une différence de marche optique fonction de la valeur de cette grandeur, ces différences de marche optique et leurs différences étant supérieures à la longueur de cohérence de la source, comme décrit par exemple dans EP-A-0 191 588.

Dans la technique antérieure, le récepteur associé à ce réseau de capteurs peut être un interféromètre, par exemple du type Michelson, que l'on accorde successivement sur chaque capteur du réseau pour lui faire produire une différence de marche optique sensiblement égale à la valeur moyenne de la différence de marche optique dans le capteur considéré, afin de produire en sortie de l'interféromètre un signal interférométrique appliqué à un photodétecteur et dont la phase est une fonction directe de la différence des différences de marche optique dans le capteur et dans le récepteur, lorsque cette différence est inférieure à la longueur de cohérence de la source. Des techniques connues de modulation de phase dans l'interféromètre récepteur et de démodulation du signal interférométrique produit permettent de connaître la phase de ce signal, et donc la différence de marche optique dans le capteur, ce qui permet de remonter à la valeur de la grandeur physique à mesurer, moyennant un étalonnage préalable (la différence de marche optique dans le récepteur étant connue).

Il est cependant relativement long et délicat d'accorder l'interféromètre récepteur successivement sur toutes les différences de marche optique générées dans les capteurs.

Une autre solution de la technique antérieure consiste à prévoir autant d'interféromètres récepteurs que de capteurs, et à les relier au réseau de capteurs par des fibres optiques et des coupleurs optiques en étoile, chaque interféromètre récepteur étant accordé sur le capteur correspondant, ce qui permet de réaliser un démultiplexage parallèle des signaux fournis par le réseau de capteurs. Cela oblige cependant à prévoir autant d'interféromètres récepteurs que de capteurs, ce qui augmente le coût d'ensemble du système.

Il a été proposé dans US-A-4 799 797 de réaliser les récepteurs au moyen de circuits optiques intégrés comprenant des substrats semi-conducteurs sur lesquels sont formés des composants intégrés tels que des guides d'onde, des électrodes et des photodétecteurs.

L'invention a pour objet un récepteur unique destiné à être associé à un réseau de capteurs du type précité, qui permette de réaliser à une cadence très élevée un démultiplexage séquentiel des signaux lumineux fournis par le réseau de capteurs.

L'invention a également pour objet un récepteur de ce type, qui puisse être réalisé sous forme d'un circuit optique intégré.

L'invention propose à cet effet un récepteur de démultiplexage séquentiel pour un réseau de capteurs du type précité, ce récepteur étant essentiellement constitué d'un circuit optique intégré à deux modes de polarisation ou à deux modes transverses, comprenant un substrat biréfringent ou semi-conducteur sur lequel sont formés des composants intégrés permettant de générer successivement des différences de marche accordées sur celles des capteurs et transmettant un signal de type interférométrique à un photodétecteur, ce récepteur étant caractérisé en ce que lesdits composants comprennent des coupleurs de modes ou des convertisseurs de modes à effet électro-optique, qui sont reliés en série sur le substrat par un guide optique et raccordés individuellement à des moyens d'application d'une tension électrique pour être activés séquentiellement et générer des différences de marche accordées sur celles des capteurs.

Dans un tel récepteur, les différences de marche requises sont générées successivement par les composants de couplage ou de conversion de modes à effet électro-optique, et l'utilisation de techniques d'optique intégrée permet une commutation très rapide de ces différences de marche.

Ce récepteur peut être du type à deux modes de polarisation, ou du type à deux modes transverses.

Dans le premier cas, le circuit optique intégré du récepteur comporte un polariseur d'entrée et un analyseur de sortie, qui sont orientés à 45° des axes neutres du substrat et qui sont réalisés avec des composants discrets ou à fibre.

Avantageusement, le polariseur d'entrée est constitué d'un polariseur orienté sur un axe neutre du substrat et suivi d'un coupleur de modes TE-TM, du type à couplage électro-optique.

De même, l'analyseur de sortie peut être constitué d'un coupleur de modes TE-TM, équivalent à celui décrit ci-dessus, suivi d'un polariseur orienté sur un axe neutre du cristal.

Il en résulte une simplification importante de la fabrication de ce polariseur et de cet analyseur sur le circuit optique intégré du récepteur.

Les différences de marche requises peuvent être générées par des convertisseurs de modes TE-TM qui sont formés en série sur une voie de guidage optique du circuit optique intégré précité, et qui sont reliés aux moyens précités d'application d'une tension électrique.

En variante, ces différences de marche peuvent être générées par des coupleurs de mode TE-TM, du type commandé qui sont formés en série sur une voie de guidage optique du circuit optique intégré du récepteur.

Un tel récepteur est utilisable avec tout type de réseau de capteurs à codage de modulation spectrale, avec une fibre optique de liaison à maintien de polarisation sur un axe neutre de laquelle se propage la polarisation. Il est utilisable également avec un réseau de capteurs quasi-répartis à deux modes de polarisation, ou bien à deux modes transverses guidés dans une polarisation.

Lorsque le réseau de capteurs est du type à deux modes transverses guidés dans deux polarisations, le circuit optique intégré comprend en entrée un séparateur de modes TE-TM et deux voies parallèles de guidage optique sur lesquelles sont formés des coupleurs de modes TE-TM générant les différences de marche requises.

Lorsque le récepteur est du type à deux modes transverses, le circuit optique intégré est du type bi-mode et comporte une voie de guidage optique sur laquelle sont formés des convertisseurs ou des coupleurs de modes correspondants et un filtre spatial assurant le mélange des deux modes.

Ce circuit optique intégré peut de plus comporter en entrée une structure monomode sur laquelle est formé un polariseur.

Dans tous les cas, un modulateur de phase à effet électro-optique peut être agencé sur le circuit optique intégré du récepteur.

Lorsque le substrat de ce circuit optique intégré est en matériau semi-conducteur, on peut également y former un photodétecteur et un démodulateur de phase.

De façon générale, l'invention permet, au moyen d'un récepteur unique, de réaliser un démultiplexage séquentiel à une cadence très élevée (qui peut atteindre des valeurs de l'ordre du gigahertz) des signaux lumineux fournis par un réseau de capteurs à codage de modulation spectrale.

L'invention sera mieux comprise et d'autres caractéristiques, détails et avantages de celle-ci apparaîtront plus clairement à la lecture de la description qui suit, faite à titre d'exemple en référence aux dessins annexés, dans lesquels :
la figure 1 représente schématiquement un réseau de capteurs à codage de modulation spectrale associé à un récepteur selon l'invention;
la figure 2 représente un réseau de capteurs intrinsèques quasi-répartis sur une fibre optique et associé à un récepteur selon l'invention;
les figures 3 et 4 représentent des variantes de réalisation du récepteur selon l'invention;
la figure 5 représente schématiquement un réseau de capteurs intrinsèques quasi-répartis sur une fibre optique, du type à deux modes transverses guidés dans deux polarisations, associé à un récepteur selon l'invention;
la figure 6 représente schématiquement une forme de réalisation d'un récepteur selon l'invention pour un réseau de capteurs à deux modes transverses;
les figures 7 et 8 représentent schématiquement des réseaux de capteurs intrinsèques quasi-répartis sur une fibre optique et associés à un récepteur selon l'invention;
la figure 9 représente schématiquement une variante de réalisation du récepteur de la figure 8;
la figure 10 représente schématiquement le circuit optique intégré d'un récepteur selon l'invention, formé sur un substrat semi-conducteur.

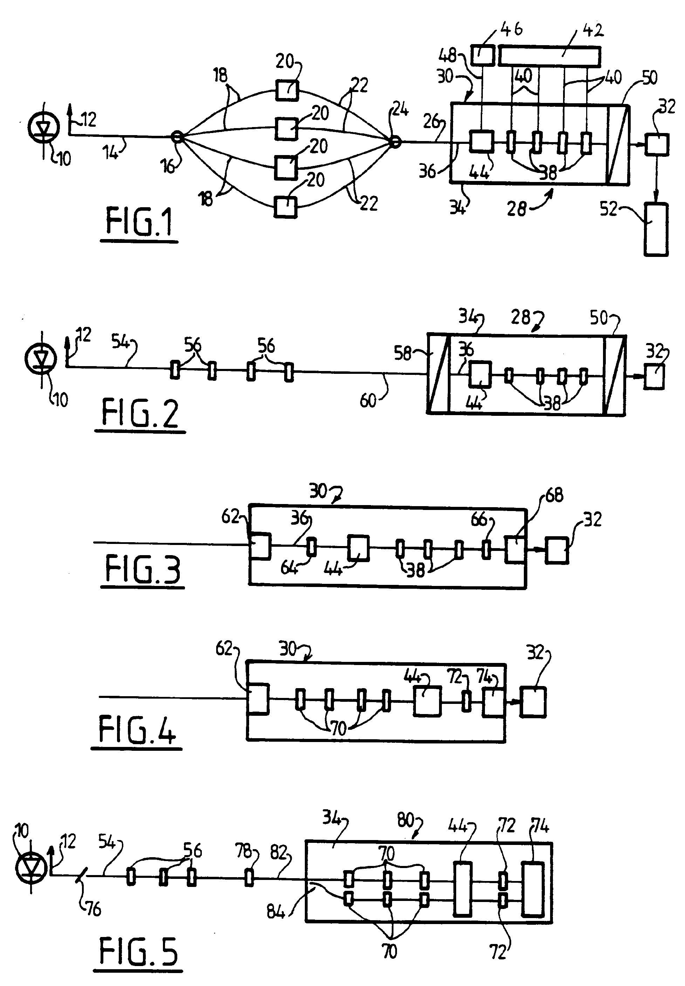

On fera d'abord référence à la figure 1, dans laquelle on a représenté un réseau en étoile de capteurs à codage de modulation spectrale, associé à un récepteur de démultiplexage séquentiel selon l'invention.

Le réseau de capteurs comprend une source 10 de lumière à faible longueur de cohérence, telle qu'une diode électro-luminescente, dont la lumière est injectée par l'intermédiaire d'un polariseur 12 dans une fibre optique 14 reliée par un coupleur en étoile 16 et des fibres optiques 18 à des capteurs 20 interférométriques soumis à une grandeur physique à mesurer telle par exemple que la température, un champ magnétique, un déplacement, etc. Chaque capteur 20 comprend un élément sensible tel par exemple qu'un cristal biréfringent, placé entre un polariseur et un analyseur qui sont orientés à 45° des axes neutres du cristal biréfringent. Le spectre de la lumière fournie à chaque capteur 20 est modulé périodiquement à une fréquence qui est une fonction de la différence de marche optique dans le capteur, cette différence de marche optique étant elle-même fonction de la valeur de la grandeur physique à mesurer.

Les sorties des capteurs 20 sont reliées par des fibres optiques 22 à un coupleur en étoile 24, relié lui-même par une fibre optique 26 à un récepteur de démultiplexage séquentiel, désigné généralement par la référence 28.

Dans la technique antérieure, ce récepteur peut être constitué par un interféromètre à deux ondes, qui génère une différence de marche optique que l'on accorde successivement sur les valeurs moyennes des différences de marche optique générées dans les capteurs 20.

Lorsque ces différences de marche optique sont supérieures à la longueur de cohérence de la source lumineuse 10, et que les différences entre ces différences de marche optique sont également supérieures à cette longueur de cohérence, on obtient en sortie de l'interféromètre récepteur un signal sinusoïdal dont la phase est la différence de phase entre le capteur 20 considéré et l'interféromètre récepteur, lorsque la différence entre la différence de marche du capteur et celle du récepteur est inférieure à la longueur de cohérence de la source. La différence de marche optique dans l'interféromètre récepteur étant connue, on peut en déduire la différence de marche optique dans le capteur, et donc la valeur de la grandeur physique à laquelle le capteur est soumis.

Dans l'exemple de réalisation de la figure 1, le récepteur 28 selon l'invention est du type à deux modes de polarisation et est constitué essentiellement d'un circuit optique intégré 30 associé à un photodétecteur 32. Le circuit optique intégré 30 est à structure optique monomode et comprend un substrat 34 anisotrope du type LiNbO3 ou LiTaO3 par exemple, ou de matière semi-conductrice (par exemple du type GaAs) dans lequel la propagation a lieu dans un plan transverse biréfringent. Ce substrat comprend un guide optique 36 réalisé en général par diffusion de titane et s'étendant entre l'entrée et la sortie du circuit optique intégré 30, pour relier en série des convertisseurs de modes TE-TM 38 formés sur le substrat 34. Chaque convertisseur 38 permet la commutation d'un mode de polarisation de la lumière à l'autre, en général par effet électro-optique. Pour cela, un réseau d'électrodes 40 est prévu pour appliquer les tensions électriques voulues à des convertisseurs 38 à peignes d'électrodes, et est relié à un circuit 42 de commutation à fréquence très élevée (qui peut être de l'ordre du gigahertz).

Dans ce type de récepteur, on utilise un plan transverse de propagation biréfringente du substrat. Les modes TE et TM n'ont pas la même constante de propagation et ne se couplent pas. Cependant, si on applique un effet électro-optique au moyen d'un peigne d'électrodes reliées à un même potentiel et réparties périodiquement le long du guide de telle manière que la période corresponde à une différence de marche multiple de la longueur d'onde entre les deux modes, le couplage a alors lieu en phase et peut prendre toute valeur comprise entre 0 et 1. La valeur 0 correspond à un mode ressortant sans changement et la valeur 1 correspond à une conversion dans l'autre mode.

Des convertisseurs de ce type ont été déjà réalisés sur des substrats de LiNb03 en coupe x et en coupe z, en utilisant le fort coefficient de couplage r₅₁. La biréfringence du LiNb03 étant forte, de l'ordre de 8.10⁻², la périodicité des électrodes est de l'ordre de 10 »m pour une longueur d'onde de 0,8 »m. Un tel composant se comporte également comme un filtre spatial, son pouvoir de résolution λ/Δλ étant égal au nombre d'électrodes. Si, dans le cas de la source 10 à spectre large, Δλ a une valeur de 10 nm à 0,8 »m, on obtient un nombre de 80 électrodes, et le convertisseur a alors une longueur de 800 »m.

La biréfringence peut également être diminuée en utilisant un substrat à quelques degrés de l'axe optique.

Une autre solution pour obtenir un filtre à large bande passante est d'utiliser une période variable le long du composant au niveau des électrodes des peignes.

Une dernière solution, pour diminuer localement la biréfringence, est de réaliser un échange protonique local au niveau du coupleur, tout en conservant le guidage optique réalisé par diffusion de titane.

Le principe du fonctionnement du récepteur comprenant ces convertisseurs de modes TE-TM est le suivant:
si l'on considère que d est la différence de marche optique entre l'axe rapide et l'axe lent d'un cristal biréfringent sur un parcours de longueur l (avec d = Bl, B étant la biréfringence), l'utilisation d'un convertisseur TE-TM en entrée de ce parcours génère alors une différence de marche optique - d.

Si la longueur du guide optique 36 du substrat 34 est L, la différence de marche optique générée sans activation des convertisseurs 38 est Do = BL.

Si le convertisseur 38 le plus proche de la sortie du guide optique est activé, la différence de marche générée est alors D1=Do-d1, où d1 correspond à la différence de marche entre le convertisseur 38 et la sortie du guide optique.

De même, si l'avant-dernier convertisseur 38 est activé, la différence de marche optique générée sera D2=Do-d2, où d2 correspond à la différence de marche optique depuis l'avant-dernier convertisseur 38 jusqu'à la sortie du guide optique.

Par un choix de dimensions appropriées et d'intervalles entre les convertisseurs 38, on peut donc générer successivement par activation séquentielle des convertisseurs 38, toutes les différences de marche requises accordées sur les différences de marche des capteurs 20.

On peut également prévoir d'activer simultanément plusieurs convertisseurs 38, dès lors que la somme algébrique des différences de marche correspondantes a une valeur désirée.

Le circuit optique intégré 30 comprend également sur le substrat 34, en amont du premier convertisseur 38, un modulateur de phase 44 à effet électro-optique, relié à un circuit de commande 46 par une électrode 48.

La sortie du circuit optique intégré 30 comprend un analyseur 50 qui est orienté à 45° des axes neutres du guide optique (ou du substrat). La lumière sortant de l'analyseur 50 est captée par le photodétecteur 32, dont le signal de sortie est transmis à un circuit 52 de démodulation de phase.

Les fibres optiques 14, 18, 22 et 26 du système sont monomodes et à maintien de polarisation. La lumière émise par la source 10 est injectée par le polariseur 12 dans une des polarisations de la fibre optique 14. Les spectres des flux lumineux fournis aux capteurs 20 sont modulés périodiquement à des fréquences qui sont fonction des valeurs de la grandeur physique agissant sur les capteurs, puis ces flux sont transmis au récepteur 28 où ils sont démultiplexés par activation séquentielle des convertisseurs 38. La modulation de phase est réalisée en 44 par effet électro-optique, qui se traduit par une modulation de la biréfringence. On peut par exemple appliquer une modulation sinusoïdale à la différence de marche optique générée dans le circuit optique 30, la détection à la fréquence de modulation et au deuxième harmonique permettant de connaître le sinus et le cosinus de la phase du signal de sortie du récepteur 28, et donc d'obtenir la valeur de cette phase.

On peut également multiplier le signal obtenu par cette modulation sinusoidale par une fonction créneau à la même fréquence et détecter le deuxième harmonique, dont la phase est alors celle à mesurer.

On peut aussi appliquer une variation de biréfringence en rampe, ce qui a pour effet de générer une fréquence intermédiaire dont la phase est celle à mesurer.

La fréquence de commutation des tensions électriques appliquées aux convertisseurs 38 est suffisamment élevée pour ne pas limiter la fréquence d'interrogation des capteurs du réseau. En effet, si la bande passante de mesure pour chaque capteur est b, cette bande doit être échantillonnée à une fréquence 2b, et la bande passante pour n capteurs est alors 2nb. Des fréquences de commutation de l'ordre du gigahertz permettent donc des fréquences élevées d'interrogation des capteurs, même si le nombre de capteurs est relativement grand.

On notera que, dans l'exemple de la figure 1, les axes neutres de la fibre de liaison 36 sont orientés à 45° des axes neutres du cristal récepteur. Si nécessaire, un polariseur aligné sur les axes neutres de la fibre optique peut être agencé en entrée du récepteur 28.

Par ailleurs, l'analyseur 50 peut être plaqué sur le substrat 34, comme représenté en figure 1, ou bien être indépendant du circuit optique intégré et agencé alors dans un système optique d'imagerie d'un type classique à deux lentilles entre lesquelles est placé l'analyseur.

Dans le mode de réalisation de la figure 2, le réseau de capteurs représenté est du type à capteurs intrinsèques quasi-répartis sur une fibre optique et utilisant les deux modes de polarisation d'une fibre à maintien de polarisation. Des réseaux de ce type sont décrits notamment dans la demande de Brevet Français 90 01345 de la demanderesse. Ils comprennent, de façon générale, une fibre optique 54 propageant quelques modes dans laquelle sont formés des points 56 de couplage intermodal, par exemple du type à réseau d'indice. Une extrémité de la fibre optique 54 est éclairée par la source 10 de lumière à faible longueur de cohérence, par l'intermédiaire d'un polariseur 12 permettant d'injecter la lumière dans un mode de polarisation dans la fibre 54 (cas de deux modes de polarisation). Les points 56 permettent de coupler le mode injecté à l'autre mode. Ces deux modes n'ayant pas les mêmes constantes de propagation, des signaux interférométriques sont générés dans la fibre optique 54. Le mélange des modes à l'extrémité du réseau de capteurs peut être réalisé au moyen d'un polariseur dont les axes sont à 45° de ceux de la fibre.

Si la fibre utilise deux modes transverses au lieu de deux modes de polarisation, le polariseur d'entrée peut être remplacé par une forte courbure, et l'analyseur de sortie par un filtre spatial ou un désalignement et une courbure.

Dans l'exemple représenté en figure 2, le réseau de capteurs formé par les points de couplage intermodal 56 dans la fibre optique 54 est à deux modes de polarisation, et la fibre optique s'étend jusqu'au récepteur 28 selon l'invention, qui comporte en entrée un polariseur 58 orienté à 45° des axes neutres de la fibre 54 et à 45° des axes neutres du cristal biréfringent du récepteur 28. Ce dernier a, hormis le polariseur 58, la même structure que le récepteur 28 de la figure 1, et comprend donc un guide optique 36 formé sur un substrat 34 de matière biréfringente, un modulateur de phase 44 et des convertisseurs TE-TM 38, agencés en série avec le modulateur de biréfringence 44 sur le guide optique 36. Un analyseur 50 orienté à 45° des axes neutres du cristal biréfringent transmet la lumière à un photodétecteur 32. Pour simplifier le dessin, les électrodes 40 et 48, le circuit de commutation 42, le circuit de commande de modulation 46 et le démodulateur de phase 52 n'ont pas été représentés en figure 2.

Dans ce système, les différences de marche optique générées dans la fibre 54 entre les points de couplage 56 et le polariseur 58 correspondent chacune à une différence de marche optique susceptible d'être générée dans le récepteur 28 par activation d'un des convertisseurs 38.

En variante, le polariseur 58 peut être détaché du récepteur 28 et relié à celui-ci par une fibre optique à maintien de polarisation, dont les axes neutres sont confondus avec ceux du polariseur 58.

Selon une autre variante, l'extrémité du réseau de capteurs peut être matérialisée par une rotation de 45° des axes neutres de la partie 60 de la fibre optique reliée au récepteur 28. Dans ce cas, le polariseur 58 en entrée du récepteur 28 est aligné sur les axes neutres de la partie 60 de la fibre, et orienté à 45° des axes neutres du cristal récepteur. Selon encore une autre variante, on peut associer au réseau de capteurs de la figure 2 le récepteur 28 de la figure 1, ne comprenant pas le polariseur 58 en entrée, si les axes lent et rapide de la fibre optique 54 correspondent respectivement aux axes rapide et lent du cristal du récepteur 28. L'ensemble fibre + récepteur forme alors un seul interféromètre.

Dans le cas où le réseau de capteurs est à deux modes transverses suivant une polarisation dans une fibre à maintien de polarisation, celle-ci a ses axes neutres confondus avec les axes du polariseur 58.

Une variante de réalisation du récepteur 28 de la figure 2 a été représentée en figure 3.

Cette variante est utilisable également avec le réseau de capteurs de la figure 1 quand la fibre de liaison est à maintien de polarisation, la polarisation étant alors alignée sur un axe neutre. Dans ce cas, le polariseur d'entrée est aligné sur l'axe neutre ou peut ne pas être nécessaire.

En figure 3, le polariseur d'entrée 58 et l'analyseur de sortie 50 du circuit optique intégré 30 sont formés chacun par l'association d'un polariseur aligné sur un axe neutre du cristal récepteur et d'un coupleur de modes TE-TM. L'axe de polarisation sélectionné par le polariseur d'entrée est le même que celui du polariseur 58 de la figure 2. Le circuit optique intégré 30 comprend donc un polariseur d'entrée 62 aligné sur l'un des axes neutres du cristal et suivi d'un coupleur de modes TE-TM 64, qui lui est relié par le guide optique 36. On trouve ensuite, comme dans les figures 1 et 2, le modulateur de biréfringence 44, les convertisseurs de modes TE-TM 38 qui permettent de générer les différences de marche requises, puis un autre coupleur de modes TE-TM 66 associé à un polariseur orienté sur un axe neutre du cristal pour former l'analyseur de sortie 50. Comme précédemment, un photodétecteur 32 capte la lumière sortant du récepteur selon l'invention.

Il est plus simple en effet de réaliser en optique intégrée des polariseurs confondus avec un axe neutre d'un cristal biréfringent. Il suffit pour cela d'un dépôt métallique ou d'une structure de guidage pour un mode de polarisation, réalisée par exemple par échange protonique, suivi ou non d'un recuit. Le coupleur TE-TM 64 placé derrière le polariseur d'entrée 62 permet d'injecter la lumière dans les deux axes neutres du cristal. Ce coupleur peut être réalisé à base de réseaux d'indice, ou bien être à effet électro-optique commandé, comme déjà décrit pour les convertisseurs. Le couplage optimum est dans ce cas de 50% dans l'autre mode de polarisation. Pour un réseau de capteurs quasi-répartis à deux modes de polarisation, le polariseur 62 est à 45° des axes neutres de la fibre ou aligne sur un axe neutre s'il y a eu rotation de 45° des axes neutres de la fibre au niveau de l'extrémité du réseau.

Le coupleur TE-TM 66 suivi du polariseur de sortie 68 réalise la fonction d'un analyseur décalé angulairement par rapport aux axes neutres du cristal. Un couplage de 50% correspond à un décalage angulaire de 45°.

La figure 4 représente une autre variante de réalisation du récepteur 28 selon l'invention. Ce récepteur comprend comme précédemment un circuit optique intégré 30 dans lequel les différences de marche requises sont générées par couplage TE-TM activé par effet électro-optique.

Le circuit optique intégré 30 comprend dans ce cas un polariseur d'entrée 62 orienté sur un axe neutre du cristal et suivi d'un certain nombre de coupleurs de modes TE-TM 70, puis un modulateur de biréfringence 44 suivi d'un coupleur de modes TE-TM 72 associé à un polariseur 74 de sortie aligné sur un axe neutre du cristal. Le photodétecteur 32 capte la lumière sortant de ce polariseur 74.

Ces coupleurs 70 sont du type commandé à effet électro-optique. Lorsqu'ils sont successivement activés, ils réalisent chacun à leur tour un couplage du mode sélectionné par le polariseur dans l'autre mode de polarisation. Ceci permet l'excitation des deux modes de polarisation et la création d'une différence de marche correspondant à la différence de chemin optique entre les deux modes depuis le coupleur activé. L'association du coupleur de sortie 72 et du polariseur 74 génère alors un signal d'interférence polarimétrique. L'activation d'un coupleur 70 correspond à la création d'une différence de marche très proche de celle d'un capteur, et l'espacement entre coupleurs permet l'adéquation de chaque différence de marche à celle d'un capteur, de sorte que tous les capteurs du réseau peuvent être interrogés séquentiellement. Pour un optimum de signal, il est préférable que tous les coupleurs TE-TM utilisés soient des coupleurs 50:50. Ceci peut être réalisé comme déjà décrit pour les convertisseurs. Un couplage moins important est cependant acceptable et dépend du niveau signal requis. On notera que le coupleur de sortie 72 peut être constamment actif.

Tous les réseaux de capteurs (en échelle, en étoile, etc, ou quasi-répartis sur une fibre) qui pouvaient être associés au récepteur de la figure 3, peuvent l'être à celui de la figure 4.

Par ailleurs, le polariseur d'entrée 62 et l'analyseur de sortie peuvent être plaqués sur le substrat (comme représenté pour le récepteur de la figure 2), le polariseur 62 étant aligné sur les axes neutres du récepteur, et l'analyseur (qui remplace le coupleur 72 et le polariseur 74) étant à 45° de ces axes neutres. Le polariseur 62 et l'analyseur de sortie peuvent également être réalisés par imagerie optique, ou être des composants à fibre.

Le récepteur de la figure 4, qui a été décrit comme destiné à être utilisé avec un réseau de capteurs à deux modes de polarisation, peut également être utilisé avec un réseau de capteurs à deux modes transverses. Dans ce cas, la polarisation choisie doit être confondue avec celle choisie par le polariseur d'entrée.

On a représenté en figure 5 une variante de réalisation d'un récepteur selon l'invention, applicable au cas d'un réseau de capteurs à deux modes transverses guidés dans les deux polarisations d'une fibre à maintien de polarisation. Le déphasage entre les deux modes n'est alors pas le même dans les deux polarisations, vis-à-vis de la grandeur physique à mesurer, telle que la température ou une déformation, ce qui peut aider à les discriminer par résolution de deux équations à deux inconnues.

Le réseau de capteurs de la figure 5 comprend la fibre optique 54 dans laquelle on a formé des points 56 de couplage intermodal et qui est éclairée par la source 10 de lumière de faible longueur de cohérence, par l'intermédiaire d'un polariseur 12. Une rotation de 45° des axes neutres de la fibre 54, en un point 76 en aval du polariseur 12, permet d'injecter les deux modes transverses dans les deux polarisations. On pourrait également orienter le polariseur à 45° des axes neutres de la fibre, dès l'injection dans celle-ci. L'extrémité du réseau de capteurs est matérialisée par un filtre spatial 78 relié au récepteur 80 selon l'invention par une fibre optique 82 à maintien de polarisation ayant ses axes neutres confondus avec ceux de la fibre 54 à laquelle elle est reliée. Ce filtre spatial peut être remplacé par un désalignement transverse et une courbure de la fibre 82 pour supprimer les modes d'ordre supérieur.

Le récepteur 80 est constitué d'un circuit optique intégré formé d'un substrat 34 du même type que précédemment, qui comporte en entrée un séparateur 84 de modes TE-TM. Ce séparateur peut être constitué d'un coupleur directif avec le mode TE dans l'état passant et le mode TM dans l'état croisé, par exemple. Des coupleurs 70 de modes TE-TM du type commandé électro-optiquement sont ensuite prévus sur deux voies de guidage optique partant du séparateur 84 en étant séparés les uns des autres de distances générant des différences de marche correspondant à celles créées par les distances entre les points 56 de couplage intermodal dans la fibre 54. Le récepteur 80 comprend ensuite un modulateur de biréfringence 44 agissant sur chaque voie de guidage optique, puis, en sortie, des coupleurs 72 de modes TE-TM associés à un polariseur 74 orienté sur un axe neutre du cristal récepteur ( ou bien un analyseur discret à 45° des axes neutres). Deux photodétecteurs reçoivent les signaux de sortie du récepteur 80.

On peut également appliquer l'invention au cas de deux modes transverses dans le récepteur, au lieu de deux modes de polarisation utilisant la biréfringence du cristal récepteur. Il suffit pour cela d'utiliser des flux lumineux ayant des longueurs d'onde inférieures à la longueur d'onde de coupure du guide optique du récepteur. Les convertisseurs ou coupleurs de modes utilisés alors dans le récepteur correspondent aux deux modes transverses; le modulateur de phase est à effet électro-optique, permettant de moduler différemment chaque mode, et donc de moduler leur différence de phase. Les polariseurs sont remplacés par des filtres spatiaux qui peuvent être formés de façon simple. Le récepteur est à nouveau réalisé sur un substrat de matière biréfringente ou semi-conductrice.

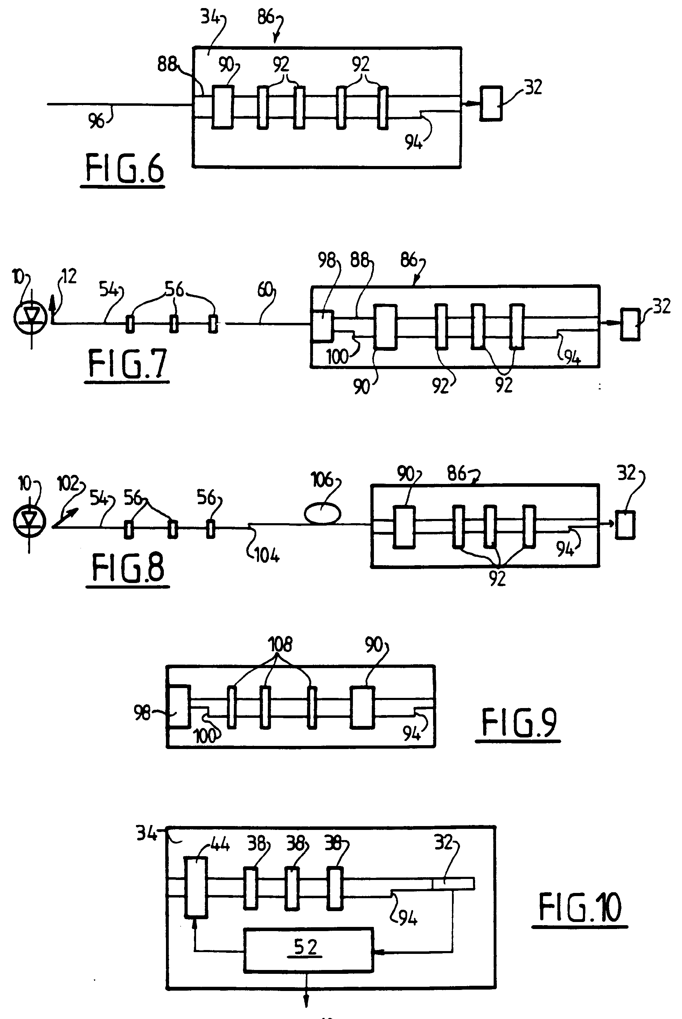

Un mode de réalisation d'un tel récepteur est représenté en figure 6. Le récepteur 86 est constitué d'un circuit optique intégré comprenant un substrat 34 du même type que précédemment sur lequel on a formé un guide optique 88 reliant en série un modulateur de phase 90 et des convertisseurs de modes 92. Un filtre spatial 94 est prévu en sortie du guide optique et est matérialisé par une variation de la forme du guide optique (en épaisseur, en largeur, ou en épaisseur et en largeur) pour mélanger les deux modes transverses. Le récepteur 86 est relié par une fibre optique 96 à maintien de polarisation, ayant ses axes neutres confondus avec ceux du cristal récepteur, à un réseau de capteurs qui peut être du type représenté en figure 1. Les deux modes transverses sont excités dans le guide optique 88.

Comme précédemment, un photodétecteur 32 reçoit le signal de sortie du récepteur 86.

Un récepteur de ce type peut également être utilisé avec un réseau de capteurs intrinsèques quasi-répartis sur une fibre optique comme représenté schématiquement en figure 7.

Dans cette figure, le réseau de capteurs utilise deux modes de polarisation et comprend une fibre optique 54 dans laquelle on a formé des points 56 de couplage intermodal et qui est éclairée par la source 10 de lumière à faible longueur de cohérence, par l'intermédiaire d'un polariseur 12. Le dernier point 56 de couplage intermodal du réseau de capteurs est relié au récepteur 86 par une fibre optique 60 dont les axes neutres ont été tournés de 45° et sont confondus avec ceux du cristal récepteur. Dans ce cas, le récepteur 86 comprend en entrée un polariseur 98 orienté sur un axe neutre du cristal récepteur et qui est formé simplement par une couche métallique ou par une propagation à fuite du mode à rejeter. Le polariseur 98 est formé sur une structure monomode et est relié aux autres composants du récepteur 86 par un guide optique 88 présentant en 100 une rupture de forme permettant l'injection de la lumière dans les deux modes transverses de la structure située en aval. Une deuxième rupture de forme du guide optique constitue le filtre spatial 94 situé en sortie qui permet de réaliser le mélange des deux modes.

Le réseau de capteurs peut également être du type à deux modes transverses comme représenté en figure 8. Il comprend alors une fibre optique 54 formée avec des points 56 de couplage intermodal, et dans laquelle la lumière émise par la source 10 est injectée en 102 dans un mode transverse. Un désalignement 104 de la fibre optique matérialise l'extrémité du réseau de capteurs. Une courbure de la fibre, schématisée ici par une boucle 106, permet de supprimer le mode d'ordre élevé. Le récepteur 86 est du même type que celui représenté en figure 6 et comprend un modulateur de phase 90, des convertisseurs de modes 92, et un filtre spatial 94 en sortie.

Le récepteur associé au réseau de capteurs de la figure 8, peut également utiliser des coupleurs de modes transverses, comme représenté en figure 9. Il comprend alors un polariseur d'entrée 98 formé sur une structure monomode et relié à un guide optique par une rupture de forme 100. Des coupleurs de modes transverses 108 formés sur le guide optique sont suivis d'un modulateur de phase 90 et d'un filtre spatial 94. En sortie du polariseur 98, le mode unique est injecté dans un mode du guide optique, puis chaque coupleur 108, quand il est activé, permet de générer une différence de marche correspondant à celle d'un capteur du réseau.

Comme indiqué précédemment, les substrats des circuits optiques intégrés selon l'invention peuvent être en matière biréfringente, par exemple en LiNb03 ou LiTa03. On peut également utiliser un substrat semi-conducteur (par exemple de GaAs si la longueur d'onde est de 0,8 »m), ce qui permet de réaliser alors sur ce substrat les fonctions de modulation, de détection et de démodulation, comme représenté schématiquement en figure 10.

Dans cette figure, la référence 34 désigne un substrat semi-conducteur, qui comporte en entrée un modulateur de phase 44 (ou 90), des convertisseurs de modes 38 (ou 92), un analyseur de sortie (ou un filtre spatial 94), et un photodétecteur 32 relié à un circuit de démodulation 52, lui-même relié au modulateur de phase.

## Revendications

1. Récepteur de démultiplexage séquentiel pour un réseau de capteurs optiques interférométriques à codage de modulation spectrale, éclairé par une source (10) de lumière à faible longueur de cohérence et dans lequel chaque capteur soumis à une grandeur physique à mesurer génère une différence de marche optique fonction de la valeur de cette grandeur, ces différences de marche optiques et leurs différences étant supérieures à la longueur de cohérence de la source, le récepteur étant essentiellement constitué d'un circuit optique intégré (30) à deux modes de polarisation ou deux modes transverses, comprenant un substrat (34) biréfringent ou semi-conducteur sur lequel sont formés des composants intégrés (38, 70, 92) permettant de générer successivement des différences de marche accordées sur celles des capteurs et transmettant un signal de type interférométrique à un photodétecteur (32), ce récepteur étant caractérisé en ce que lesdits composants (30, 70, 92) comprennent des coupleurs de modes ou des convertisseurs de modes à effet électro-optique, qui sont reliés en série sur le substrat (34) par un guide optique et raccordés individuellement à des moyens (40) d'application d'une tension électrique pour être activés séquentiellement et générer des différences de marche accordées sur celles des capteurs.

2. Récepteur selon la revendication 1, caractérisé en ce qu'il comprend des moyens (42) de commutation à fréquence élevée des tensions électriques appliquées aux moyens (38, 70, 92) de couplage ou de conversion de modes.

3. Récepteur selon la revendication 1 ou 2, du type à deux modes de polarisation, caractérisé en ce que le circuit optique intégré (30) est du type monomode dans chaque axe neutre du substrat.

4. Récepteur selon l'une des revendications précédentes, caractérisé en ce que le circuit optique intégré (30) comporte un modulateur de phase (44, 90) à effet électro-optique.

5. Récepteur selon l'une des revendications précédentes, caractérisé en ce qu'il est relié par une fibre optique (26, 60, 82, 96) à maintien de polarisation au réseau de capteurs qui est d'un type quelconque par exemple en étoile, en échelle ou à capteurs intégrés quasi-répartis sur une fibre optique.

6. Récepteur selon l'une des revendications précédentes, caractérisé en ce qu'il est du type à deux modes de polarisation et en ce que le circuit optique intégré (30) comporte un polariseur d'entrée (58) et un analyseur de sortie (50), qui sont orientés à 45° des axes neutres du substrat.

7. Récepteur selon la revendication 6, caractérisé en ce que le polariseur d'entrée est constitué d'un polariseur (62) orienté sur un axe neutre du substrat et suivi d'un coupleur (64, 70) de modes TE-TM, par exemple du type à réseau d'indice ou activé électro-optiquement.

8. Récepteur selon la revendication 6 ou 7, caractérisé en ce que l'analyseur de sortie est constitué d'un coupleur de modes TE-TM (66, 72), par exemple du type à réseau d'indice ou activé électro-optiquement, suivi d'un polariseur (68, 74) orienté sur un axe neutre du cristal.

9. Récepteur selon l'une des revendications précédentes, caractérisé en ce qu'il est du type à deux modes de polarisation et en ce que le circuit optique intégré (30) comprend une voie de guidage optique sur laquelle sont formés en série des convertisseurs de modes TE-TM (38) du type commandé, précédés d'un modulateur de biréfringence (44) à effet electro-optique.

10. Récepteur selon l'une des revendications 1 à 8, caractérisé en ce qu'il est du type à deux modes de polarisation, et en ce que le circuit optique intégré (30) comprend une voie de guidage optique sur laquelle sont formés en série des coupleurs de modes TE-TM (70), du type commandé, suivis d'un modulateur de biréfringence (44) à effet électro-optique.

11. Récepteur selon une des revendications 1 à 10, caractérisé en ce qu'il est utilisable avec un réseau de capteurs quasi-répartis à deux modes transverses guidés dans une polarisation ou à deux modes de polarisation.

12. Récepteur selon l'une des revendications 1 à 5, caractérisé en ce qu'il reçoit un signal provenant de deux polarisations, et en ce que le circuit optique intégré (30) comprend en entrée un séparateur de modes TE-TM (84) et deux voies parallèles de guidage optique sur lesquelles sont formés des coupleurs de modes TE-TM (70) générant les différences de marche requises, puis un modulateur de biréfringence (44).

13. Récepteur selon la revendication 1 ou 2, du type à deux modes transverses, caractérisé en ce que le circuit optique intégré est du type multimode et comporte une voie de guidage optique sur laquelle sont formés un modulateur de phase (90) à effet électro-optique et des convertisseurs ou coupleurs de modes (92) correspondants, ainsi qu'un filtre spatial (94) de sortie assurant le mélange des deux modes.

14. Récepteur selon la revendication 13, caractérisé en ce que le circuit optique intégré comporte en entrée une structure monomode sur laquelle est formé un polariseur (98).

15. Récepteur selon l'une des revendications précédentes, caractérisé en ce que le substrat est en LiNb03 ou LiTa03.

16. Récepteur selon une des revendications 1 à 14, caractérisé en ce que le circuit optique intégré est à substrat (34) semi-conducteur tel que du GaAs et comporte un photodétecteur (32) et un démodulateur de phase (52).

## Patentansprüche

1. Empfänger zum seriellen Demultiplexen für ein Netz von optischen interferometrischen Sensoren mit spektraler Modulationskodierung, der von einer Lichtquelle (10) mit kurzer Kohärenzlänge beleuchtet ist und in dem jeder einer physikalischen Meßgröße unterworfene Sensor als Funktion des Wertes dieser Größe eine Weglängendifferenz erzeugt, wobei diese optischen Weglängendifferenzen und ihre Differenzen größer als die Kohärenzlänge der Quelle sind und wobei der Empfänger im wesentlichen von einer integrierten optischen Schaltung (30) mit zwei Polarisationsmoden oder zwei Transversalmoden gebildet ist, die ein doppelbrechendes oder halbleitendes Substrat (34) aufweist, auf dem integrierte Bauelemente (38, 70, 92) ausgebildet sind, die es gestatten nacheinander Weglängendifferenzen, die auf diejenigen der Sensoren abgestimmt sind, zu erzeugen und ein interferometerartiges Signal auf einen Photodetektor (32) zu übertragen, wobei der Empfänger **dadurch gekennzeichnet** ist, daß die Bauelemente (30, 70, 92) elektrooptische Modenkoppler oder Modenwandler umfassen, die auf dem Substrat (34) durch einen optischen Leiter in Reihe geschaltet sind und die einzeln an Mittel (40) zum Anlegen einer elektrischen Spannung angeschlossen sind, um nacheinander aktiviert zu werden und um Weglängendifferenzen, die auf diejenigen der Sensoren abgestimmt sind, zu erzeugen.

2. Empfänger nach Anspruch 1, dadurch gekennzeichnet, daß er hochfrequente Umschaltmittel (42) für elektrische Spannungen, die an die Modenkopplungsmittel und Modenumwandlungsmittel (38, 70, 92) angelegt werden, aufweist.

3. Empfänger nach Anspruch 1 oder 2 für zwei Polarisationsmoden, dadurch gekennzeichnet, daß die integrierte optische Schaltung (30) in jeder neutralen Achse des Substrats von der einmodigen Art ist.

4. Empfänger nach einem der vorstehenden Ansprüche, dadurch gekennzeichnet, daß die integrierte optische Schaltung (30) einen elektrooptischen Phasenmodulator (44, 90) umfaßt.

5. Empfänger nach einem der vorstehenden Ansprüche, dadurch gekennzeichnet, daß er über eine polarisationserhaltende Lichtleitfaser (26, 60, 82, 96) an ein Netz von Sensoren angeschlossen ist, das von beliebiger, beispielsweise sternförmiger, leiterförmiger Art oder von einer Art mit integrierten, auf eine Lichtleitfaser quasi-verteilten Sensoren ist.

6. Empfänger nach einem der vorstehenden Ansprüche, dadurch gekennzeichnet, daß er von der Art eines Empfängers mit zwei Polarisationsmoden ist und daß die integrierte optische Schaltung (30) einen Eingangspolarisator (58) und einen Ausgangsanalysator (50) umfaßt, die unter 45 Grad zu den neutralen Achsen des Substrats ausgerichtet sind.

7. Empfänger nach Anspruch 6, dadurch gekennzeichnet, daß der Eingangspolarisator von einem Polarisator (62) gebildet ist, der auf eine neutrale Achse des Substrats ausgerichtet ist und dem ein TE-TM-Modenkoppler (64, 70) beispielsweise von der Art eines Modenkopplers mit Indexgitter oder elektrooptisch betriebenen Modenkopplers folgt.

8. Empfänger nach Anspruch 6 oder 7, dadurch gekennzeichnet, daß der Ausgangsanalysator von einem TE-TM-Modenkoppler (66, 72) gebildet ist, beispielsweise von der Art eines Modenkopplers mit Indexgitter oder eines elektrooptisch betriebenen Modenkopplers, dem ein auf eine neutrale Achse des Kristalls ausgerichteter Polarisator (68, 74) folgt.

9. Empfänger nach einem der vorstehenden Ansprüche, dadurch gekennzeichnet, daß er von der Art eines Empfängers mit zwei Polarisationsmoden ist und daß die integrierte optische Schaltung (30) einen optischen Leiterpfad aufweist, auf dem in Reihe gesteuerte TE-TM-Modenwandler (38) ausgebildet sind, denen ein elektrooptischer Doppelbrechungsmodulator (44) vorausgeht.

10. Empfänger nach einem der Ansprüche 1 bis 8, dadurch gekennzeichnet, daß er von der Art eines Empfängers für zwei Polarisationsmoden ist und daß die integrierte optische Schaltung (30) einen optischen Leiterpfad aufweist, auf dem in Reihe gesteuerte TE-TM-Modenkoppler (70) ausgebildet sind, denen ein elektrooptischer Doppelbrechungsmodulator (44) folgt.

11. Empfänger nach einem der Ansprüche 1 bis 10, dadurch gekennzeichnet, daß er zusammen mit einem Netz von quasi-verteilten Sensoren mit zwei in einer Polarisation geführten Transversalmoden oder mit zwei Polarisationsmoden benutzbar ist.

12. Empfänger nach einem der Ansprüche 1 bis 5, dadurch gekennzeichnet, daß er ein von zwei Polarisationen stammendes Signal erfaßt und daß die integrierte optische Schaltung (30) am Eingang einen TE-TM-Modentrenner (84) und zwei parallele optische Leiterpfade aufweist, auf denen die TE-TM-Modenkoppler (70), die die erforderlichen Weglängendifferenzen erzeugen, sowie ein Doppelbrechungsmodulator (44) ausgebildet sind.

13. Empfänger nach Anspruch 1 oder 2 mit zwei Transversalmoden, dadurch gekennzeichnet, daß die integrierte optische Schaltung mehrmodig ist und einen optischen Leiterpfad aufweist, auf dem ein elektrooptischer Phasenmodulator (90) und entsprechende Modenwandler und Modenkoppler (92) sowie ein räumliches Ausgangsfilter (94), das die Mischung der zwei Moden gewährleistet, ausgebildet sind.

14. Empfänger nach Anspruch 13, dadurch gekennzeichnet, daß die integrierte optische Schaltung am Eingang einen einmodigen Aufbau aufweist, auf dem ein Polarisator (98) ausgebildet ist.

15. Empfänger nach einem der vorstehenden Ansprüche, dadurch gekennzeichnet, daß das Substrat aus LiNb0₃ oder LiTa0₃ ist.

16. Empfänger nach einem der Ansprüche 1 bis 14, dadurch gekennzeichnet, daß die integrierte optische Schaltung mit einem halbleitenden Substrat (34), wie beispielsweise GaAs, versehen ist und einen Photodetektor (32) sowie einen Phasenmodulator (52) aufweist.

## Claims

1. A sequential demultiplexing receiver for a network of interferometer optical sensors using spectrum modulation encoding and illuminated by a source (10) of light having short coherence length, in which each sensor subjected to a physical magnitude to be measured generates an optical path length difference that is a function of the value of said magnitude, said optical path length differences and the differences between them being greater than the coherence length of the source, the receiver being essentially constituted by an integrated optical circuit (30) having two polarization modes or two transverse modes, the circuit comprising a substrate (34) that is birefringent or semiconductive on which integrated components (38, 70, 92) are formed enabling path length differences tuned to those of the sensors to be generated in succession, and transmitting an interferometer type signal to a photodetector (32), said receiver being characterized in that said components (30, 70, 92) comprise mode couplers or electro-optical effect mode converters, which components are connected in series on the substrate (34) by a light waveguide and are individually connected to means (40) for applying electrical voltages thereto to enable them to be activated sequentially, thus generating path length differences tuned to those of the sensors.

2. A receiver according to claim 1, characterized in that it comprises high frequency switching means (42) for switching the electrical voltages applied to the mode conversion or mode coupling means (38, 70, 92).

3. A receiver according to claim 1 or 2, of the type having two polarization modes, characterized in that the integrated optical circuit (30) is of the monomode type on each of the neutral axes of the substrate.

4. A receiver according to any preceding claim, characterized in that the integrated optical circuit (30) includes an electro-optical effect phase modulator (44, 90).

5. A receiver according to any preceding claim, characterized in that it is connected by a polarization-maintaining optical fiber (26, 60, 82, 96) to the network of sensors which may be of any type, e.g. a star network, a ladder network, or a network having integrated sensors quasi-distributed along an optical fiber.

6. A receiver according to any preceding claim, characterized in that it is of the type having two polarization modes, and in that the integrated optical circuit (30) includes an inlet polarizer (58) and an outlet analyzer (50) which are oriented at 45° to the neutral axes of the substrate.

7. A receiver according to claim 6, characterized in that the inlet polarizer is constituted by a polarizer (62) oriented on the neutral axis of the substrate and followed by a TE-TM mode coupler (64, 70), e.g. of the electro-optically activated or the index grating type.

8. A receiver according to claim 6 or 7, characterized in that the outlet analyzer is constituted by a TE-TM mode coupler (66, 72), e.g. of the electro-optically activated or the index grating type, followed by a polarizer (68, 74) oriented on a neutral axis of the crystal.

9. A receiver according to any preceding claim, characterized in that it is of the type having two polarization modes, and in that the integrated optical circuit (30) comprises a light waveguide channel on which controlled type TE-TM mode converters (38) preceded by an electro-optical effect birefringence modulator (44) are formed in series.

10. A receiver according to any one of claims 1 to 8, characterized in that it is of the type having two polarization modes, and in that the integrated optical circuit (30) comprises a light waveguide channel on which controlled type TE-TM mode couplers (70) followed by an electro-optical effect birefringence modulator (44) are formed in series.

11. A receiver according to any one of claims 1 to 10, characterized in that it is usable with a network of quasi-distributed sensors having two transverse modes guided in one polarization or having two modes of polarization.

12. A receiver according to any one of claims 1 to 5, characterized in that it receives a signal coming from two polarizations, and in that the integrated optical circuit (30) comprises a TE-TM mode separator (84) at its inlet and two parallel light waveguide channels on which TE-TM mode couplers (70) generating the required path length differences are formed, followed by a birefringence modulator (44).

13. A receiver according to claim 1 or 2, of the type having two transverse modes, characterized in that the integrated optical circuit is of the multimode type and includes a light waveguide channel on which an electro-optical effect phase modulator (90) and corresponding mode couplers or converters (92) are formed, together with an outlet space filter (94) for mixing the two modes.

14. A receiver according to claim 13, characterized in that the integrated optical circuit includes, at its inlet, a monomode structure on which a polarizer (98) is formed.

15. A receiver according to any preceding claim, characterized in that the substrate is made of LiNbO₃ or LiTaO₃, for example.

16. A receiver according to any one of claims 1 to 14, characterized in that the integrated optical circuit has a semiconductor substrate (34) such as GaAs, for example, and includes a photodetector (32) and a phase demodulator (52).
